(19) **Europäisches Patentamt / European Patent Office / Office européen des brevets**

(11) **EP 1 391 999 B1**

(12) **EUROPEAN PATENT SPECIFICATION**

(45) Date of publication and mention
of the grant of the patent:
**15.10.2008 Bulletin 2008/42**

(51) Int Cl.:
**H04B 1/707** (2006.01)

(21) Application number: **02018892.6**

(22) Date of filing: **23.08.2002**

(54) **Synchronization and cell search method and apparatus for a WCDMA system**

Synchronisations- und Zellsuchverfahren und -Vorrichtung für ein WCDMA-System

Procédé et appareil de recherche de cellule et de synchronisation pour un systeme WCDMA

(84) Designated Contracting States:
**DE FR GB**

(43) Date of publication of application:
**25.02.2004 Bulletin 2004/09**

(73) Proprietor: **Chunghwa Telecom Co., Ltd.**
**Taoyuan (TW)**

(72) Inventor: **Liu, Chia-Horng**
**Taoyuan (TW)**

(74) Representative: **Viering, Jentschura & Partner**
**Postfach 22 14 43**
**80504 München (DE)**

(56) References cited:
| | |
|---|---|
| **EP-A- 0 930 723** | **WO-A-01/01596** |
| **WO-A-01/03321** | **WO-A-01/76087** |
| **WO-A-01/76092** | **US-B1- 6 226 315** |

EP 1 391 999 B1

**Description**

**BACKGROUND OF THE INVENTION**

**1. Field of the invention**

The present invention relates to synchronization and cell search method and apparatus for a WCDMA system. In particular, with the aid of predetermined synchronization codes and pilot channel transmitted from a base station to achieve the objects of slot boundary synchronization, frame boundary synchronization by utilizing a coherent synchronization. Besides, the received signal power can be estimated at the front end of this system so as to efficiently perform synchronizing process and reduce the detection complexity.

**2. Description of the Prior Art**

In a wireless mobile communication system, initial synchronization and cell search is the first step to access the communication network for a mobile station user. After the synchronization between the mobile station and the network is established, the mobile station is thereafter able to acquire the system information and proceed the communication with assured communication quality. The initial synchronization and cell search process in UMTS WCDMA system consists of three stages: The first stage is to establish the slot boundary synchronization by identifying slot initiation point (slot boundary), the second stage is to identify the frame initiation point (frame boundary) and search for the scrambling code group thereby establishing the frame boundary synchronization, and the third stage is to search for the scrambling code which belongs to this cell among the scrambling code groups for proceeding successive communication service. In the first stage synchronization process, the slot synchronization is carried out by the mobile station by means of a predefined synchronization code, primary synchronization code (PSC), transmitted from the base station. The PSC is transmitted from the base station continuously in a manner occupying the first 1/10 part of a slot. In the second stage synchronization process, the frame boundary synchronization is carried out by the mobile station by means of another predefined synchronization code, secondary synchronization code (SSC), transmitted from the base station in a manner occupying the first 1/10 part of a slot. SSC differs from PSC that certain combination of SSCs is transmitted for a frame, and this combination is repeatedly transmitted for every frame, which corresponds to a particular scrambling code group. In the third stage synchronization process, a pilot channel is used by the mobile station to determine the scramble code (SC) transmitted from the base station. In UMTS WCDMA wireless mobile communication system, the slot length is defined to be 2560 chips and the frame length is 38400 chips. Hence, 15 slots are included in a frame. Since certain degree of mutual interference among the three codes is inevitable, PSC, SSC and SC can be transmitted simultaneously from the base station.

In the first stage synchronization, a matched filter is usually used for matching the received signal with the predefined PSC in one slot, i.e. 2560 chips, wherein the window length of the matched filter is 256 chips. In the second stage synchronization, a bank of correlators is usually adopted for correlating the received signal with all possible SSC candidates in the first 256 chips per slot. After the correlation of all possible SSCs, these correlated values are combined according to the scrambling code group patterns. The scrambling code group in corresponding with the maximum combined value is selected, and at the same time, the frame boundary is also identified. In the third stage synchronization, a bank of correlators is usually implemented with respect to all chips in each slot for correlating the received signal with all possible SC signals in the scrambling code group so as to search for the maximum value thereby locating the SC of the cell. The aforementioned concept of synchronization and cell search method for wireless mobile communication systems have been disclosed in the Patents WO0101596, WO0055992, US 6289007, US 6226315, and AU 6058100. The state of the art additionally includes WO017092 which describes a method and apparatus for improving searching in a remote unit of a slotted mode, wireless communication system. The remote unit is operable, responsive to the pilot signal strength, to dynamically adjust the integration interval used for searching the received signal. The state of the art also includes WO0176087 which describes a system and method for acquiring a pilot signal in a wireless communication system, that system and method employing coarse search parameters for initially searching the pilot signal quickly, and fine search parameters, for further searching identified pilot signal segments.

In the present day wireless mobile communication situation, the initial synchronization and cell search quality is severely degraded by the presence of the background noise and the interference. Besides, in the mobile cellular communication systems, the radio multipath channel fading is also an important factor to the synchronization and the cell search performance. Current means and apparatus of synchronization and cell search for UMTS WCMDA wireless mobile communication systems only perform well at high SIR and slow fading multipath channels. However, in an environment of low SIR and fast fading multipath channel, existing means and apparatus do not work satisfactorily. In order to establish a reliable synchronization between the mobile station and base station as soon as possible, a reliable synchronization method and apparatus for various radio environments is necessary. Furthermore, the complexity in existing method and apparatus of synchronization and cell search must be eliminated so as to reduce the power consumption of the mobile station and to enhance the durability of batteries as well.

In view of the foregoing situations, the inventors of the present invention herein conducted intensive research based on many years of experience gained through professional engagement in the radio communication engineering with continuous experimentation and improvement culminating in the development of the present invention which will be disclosed hereinafter.

## SUMMARY OF THE INVENTION

It is an object of the present invention to provide a relevant fast and simplified synchronization and cell search method and apparatus for UMTS WCDMA system. A power detector is installed at the front end of the synchronization apparatus to measure the received signal power. Besides, a process controller is utilized which being designed to control the process of the synchronization and cell search according to the received signal power measured by the power detector. The process of the synchronization and cell search consists of three stages, wherein there are three detectors, each of which is offered with respective synchronization functions, are provided for these three stages. Finally, a decision unit is equipped to verify the validity of the synchronization results obtained through these three stages.

To achieve the above mentioned objects, the synchronization and cell search apparatus of the present invention comprises a power detector, two relevant time delay units, a process controller, a first stage detector, a second stage detector, a third stage detector, and a decision unit. Suppose all received signals, including PSC, SSC, SC, interference noise signals, and an additive white Gauss noise are represented as $r(n)$. At first, $r(n)$ is sent into the power detector to measure the received signal power. Due to the time variation nature of the radio signals, the measured values of the received signal must be averaged continuously over a period of time. The received signal power measured is used to represent the quality of current radio channel condition and the signal transmission distance. At the same time, the received signal is also sent into the first stage detector. Before the received signal is sent into the second and the third stage detectors, it is delayed in the first and the second time delay units respectively for period of times, which is controlled by the process controller.

In the present invention, the output of the power detector is sent into the process controller. The radio channel conditions are roughly estimated from the measured value of the received signal power. The process controller makes use of the measured value of the received signal power to determine the delay time of the first and the second time delay units so as to control entry time of the received signal into the second and the third stage detectors, Besides, the correlation lengths for each stage detector are also decided by the process controller. Therefore, the synchronization process provided by the present invention can be effectively carried out according to radio channel conditions thereby cutting down the average power consumed by the mobile stations.

The first stage detector is used for PSC detection so as to identify the slot boundary. At first, a received complex signal is separated into a real value signal and an imaginary value signal. After that, both are treated through the matched filters so as to match with PSC. Then, the absolute value of the complex signal output from the matched filter is calculated to find out a real position among all possible slot initiation points in one slot time. That means there are 2560 possible slot boundaries to select from. Due to the radio channel interference singles, additive white Gauss noise, and the multipath fading, the matched filters are usually unable to identify the slot boundary accurately within one slot time. Therefore, these 2560 possible positions in a slot are correlatively accumulated for a period of time to obtain the accurate slot boundary. In order to further enhance the decision accuracy, the matched filter outputs of the real signal and the imaginary signal values are coherently combined respectively before the absolute value is calculated. As there is no information coming from other radio channels, the coherent combination is achieved by the use of a first order IIR (infinite impulse response) filter, i.e. an $\alpha$ -tracker, wherein leakage factor $\alpha$ is for controlling the average length of the coherent combination.

In the present invention, the second stage detector is used for SSC detection so as to identify frame boundary (initiation point) and find out the scrambling code group in a cell. Since the synchronization process is pipelined, the received complex signal must be delayed for a relevant period of time through the first time delay unit before entering the second stage detector. This period of delayed time is controlled by the process controller and the determination is made according to the radio channel conditions. After that, the delayed complex signal received is separated into a real value signal and an imaginary value signal as in the first stage. Then it is treated by a SSC correlation filter bank to calculate the correlation between the received complex signal and SSC thereby finding out the frame boundary. The size of the filter bank depends on the number of SSCs, which is 16 according to UMTS WCDMA standards. At this second stage detection, the slot boundary is assumed to be found and 16 SSC correlation filters are used to calculate the correlation of the first 256 chips in each slot and 16 SSCs during one frame time, wherein only one multiplier and one adder are required for a correlation filter. The results of these 16 SSC correlation filters obtained during one slot time are summed up coherently every information frame to obtain better detection results. The phase information required for coherent accumulation comes from the first stage detector. After that, the absolute values of these results in one frame are taken and accumulated according to the scrambling code group patterns defined in 3G TS25.213 to identify the frame boundary and the scrambling code group. To simplify the pattern search process, the present invention provides a simplified search process for the scrambling code group. Finally, the frame boundary and the cell scrambling code group are determined by selecting the pattern with the largest combination value.

In the present invention, the third stage detector is used for detecting SC. After the determination of frame boundary and scrambling code group, there are still 8 possible scrambling codes within the group to select from. As in the second stage detection, the received complex signal must be delayed for a period of time through the second time delay unit before being sent into the third stage detector. This delay time is controlled by the process controller and the determination is made according to the current radio channel condition. After that, the delayed complex signal received is separated into a real value signal and an imaginary value signal as that is treated in the first stage. Then it is treated by a SSC correlation filter bank to calculate the correlation between the received complex signal and all SCs in the SC group thereby finding out the real SC. The size of the filter bank depends on that of the SC group, which is 8 according to UMTS WCDMA standards. At this third stage detection, the frame boundary is assumed to be found, and 8 SC correlation filters are used to calculate the correlation of the 38400 chips in one frame with the 8 SCs. The results of these 8 SSC correlation filters obtained during one slot time are summed up coherently every information frame so as to obtain better detection results. The phase information required for coherent accumulation comes from the first stage detector. After that, the absolute values of these results are picked out to search for the largest absolute value in the scrambling code group. The cell SC is the one corresponding to that largest absolute value.

The decision unit is used to verify the validity of the detected synchronization results. If the synchronization result is invalid, the above three stage process is continued until a valid result is realized.

## BRIEF DESCRIPTION OF THE DRAWINGS

The accompanying drawings, which are incorporated in and constitute a part of this specification, illustrate embodiments of the invention together with the description serve to explain the objects, advantages, and principles of the invention.

Fig.1 is the block diagram of the synchronization and cell search apparatus for a WCDMA system of the present invention;
Fig.2 shows the relationship between the synchronization signals PSC, SSC transmitted from the base station and the pilot channel according to the present invention;
Fig.3 shows the schematic illustration diagram of SSC in one frame transmitted from a base station according to the present invention;
Fig.4 shows the flow chart of the synchronization and cell search process controlled by the process controller of Fig.1 according to the present invention;
Fig.5 shows the block diagram of the first stage detector according to the present invention;
Fig.6 shows the block diagram of the second stage detector according to the present invention;
Fig.7 shows the flow chart of the scrambling code group searching algorithm according to the present invention; and
Fig.8 shows the block diagram of the third sage detector according to the present invention.

## DETAILED DESCRIPTION OF THE PREFERRED EMBODIMENT

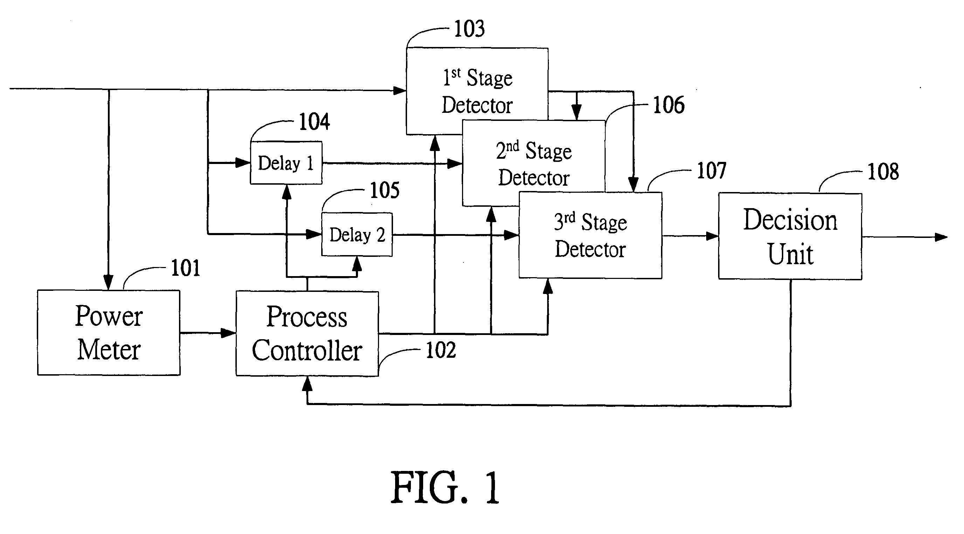

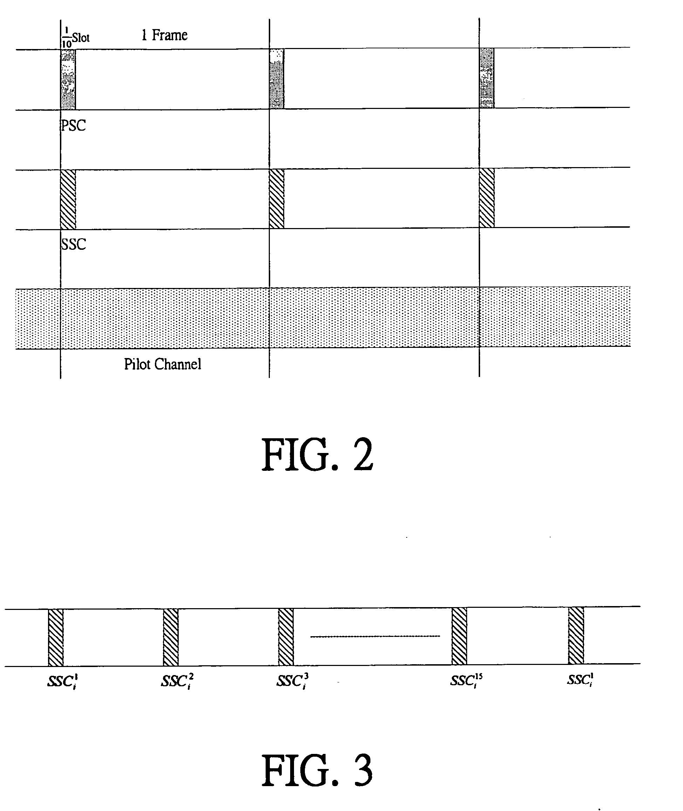

Referring to Fig.1, the block diagram of the synchronization and cell search apparatus for a WCDMA system of the present invention, the aim of synchronization and cell search is achieved by utilizing PSC, SSCs, and the pilot channel of the received signal, which is transmitted from the base station. The relationship between PSC, SSC, and the pilot channel signal is shown in Fig.2. It is shown from Fig.2 that PSC and SSC are transmitted for the first 1/10 slot time on-and-off, while the pilot channel signal is transmitted continuously and repeatedly for one frame. Since the correlation between these three synchronization signals is low, the mutual interference is negligible if correlation length is sufficient.

The frame structure of SSC for the $\ell$ th scrambling code group is shown in Fig.3, wherein $\ell$ represents the $\ell$ th SC group. As shown in Fig.3, 15 SSCs are transmitted for the first 250 chips in 15 slots of one frame. The pattern of transmitting SSCs for one frame is based on 3G TS25.213 standards, where 64 patterns are defined.

Returning to Fig.1 again, wherein the synchronization and cell search apparatus comprises a power detector 101, a process controller 102, a first stage detector 103, two time delay units 104 and 105, a second stage detector 106, a third stage detector 107, and a decision unit 108. At first, the received signal $r(n)$ is sent into the power detector 101 for power estimation of the received signal according to the following equation:

$$E(n) = (1 - \gamma) * E(n-1) + \gamma * \{r(n) * r^*(n)\}$$

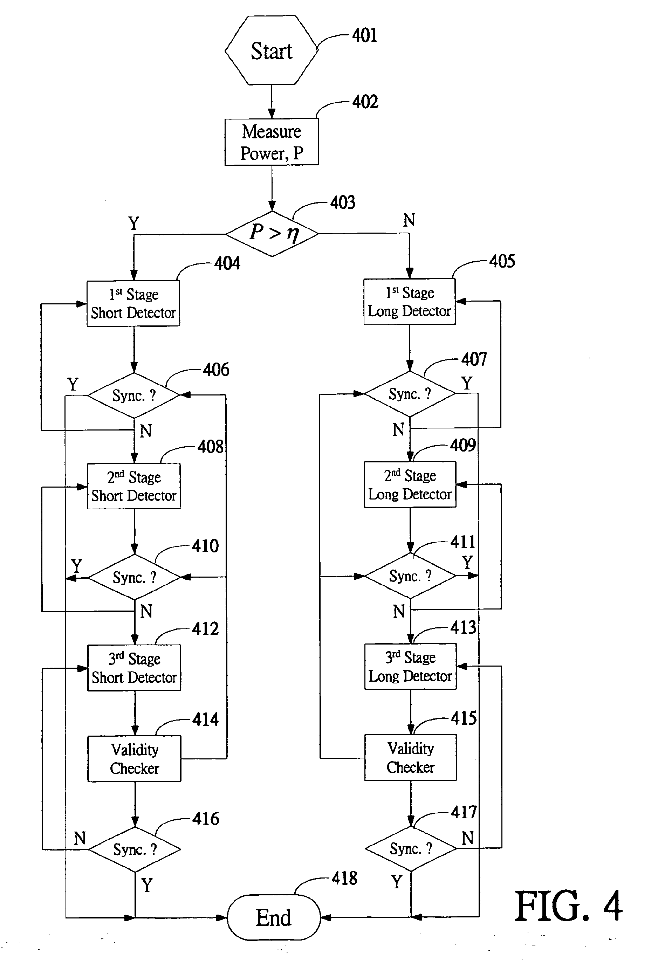

, where $\gamma$ is a leakage factor used to control the average length. $\gamma$ is generally set to be around 0.95 to 0.99. The estimated signal power $E(n)$ is sent into the process controller 102 to perform a pipeline procedure for synchronization and determine the correlation length of the synchronization in the three stages. The synchronization process is performed efficiently and effectively by utilizing the process controller 102. The synchronization process controlled by the process controller 102 is illustrated in the flow chart shown in Fig.4. At the beginning (401), power P (402) measured by the power detector 101 is compared with a predefined threshold $\eta$(403) to determine the correlation length for the three synchronization stages to follow, where $\eta$ is an experimental value. If P is greater than the threshold $\eta$, the present channel condition is considered to be good and the synchronization process for the three stages require only half correlation time. Otherwise, the synchronization process requires full correlation time. At the first stage the detector (404) works for a short correlation length while the detector (405) works for a long correlation length so as to correlate the received signal with the pre-defined PSC in one slot time to find out the slot boundary, and to judge whether the time slot synchronization found by the first stage detectors is correct or not (406,407). If not, the first stage detectors continue to carry on detection for the next slot and accumulate the results. Otherwise, the first stage detection process stops. Following that, the second stage detection (408) works for a short correlation length while detection (409) works for a long correlation length so as to correlate the received signal with the SSCs in one frame to find out the frame boundary, and to identify the scrambling code group. In a good radio channel condition, the delay for pipeline process in the second stage detection can be shortened, e.g. 5 slots, and the correlation time can also be shortened. Otherwise, the long delay time is required, e.g. 1 frame. Next to judge whether the frame boundary found by the second stage detector is correct or not (410,411). If not, the second stage detector continues to carry on detection for the next frame, and accumulate the results. Otherwise, the second stage detection process end. Following that, the third stage detection (412) works for a short correlation length while detection (413) works for a long correlation length so as to correlate the received signal with all SCs of scrambling code group in one frame, wherein the scrambling code group is determined by the second stage detector. Similarly, in a good radio channel condition, the correlation time in the third stage detection can be halved. Then, to judge whether the SC found in third stage detection is correct or not (416,417). If not, the third stage detection process continues to carry on for the next frame, and accumulate the results. Otherwise, the third stage detection process ends. The validity of the process is checked by a system synchronization test after the completion of all three stages detection process (414,415). The result is fed back to the check station of each stage. The whole synchronization process ends as soon as the valid synchronization result is obtained (418).

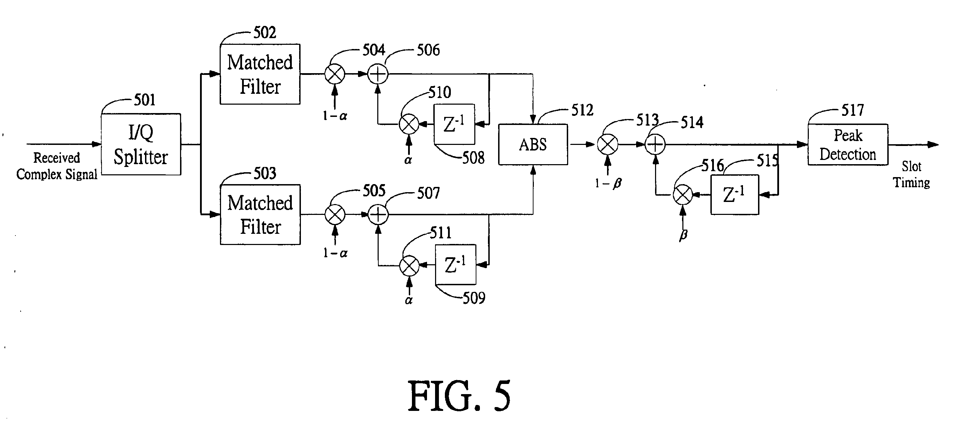

Fig.5 shows the block diagram of the first stage detector, which is used to identify the slot boundary. The first stage detector comprises a I/Q splitter 501, two matched filters 502 and 503, six multipliers 504,505,510,511,513, and 516, three adders 506,507, and 514, three time delay units 508,509, and 515, an ABS (absolute value calculator) unit 512, and a peak value detector 517. At first, the received complex signal is separated into a real value signal and an imaginary value signal by the I/Q splitter 501. After that two matched filters 502 and 503 are utilized to correlate the real value signal and the imaginary value signal with predefined PSC respectively, as shown in the following equations:

$$R1_{I,j}(k) = \text{Re}\{\sum_{n=1}^{N} r_j(n+k) * P(n)\}, \qquad j \text{ is slot numbering and N is PSC length} \tag{1}$$

$$R1_{Q,j}(k) = \text{Im}\{\sum_{n=1}^{N} r_j(n+k) * P(n)\}$$

$$r_j(n) = r(n + M * (j-1)), \quad M \text{ is chip numbers per slot} \tag{2}$$

$$r(n) = \begin{cases} h(n) * [P(n) + S(n) + \hat{P}_h(n) + I(n)] + w(n), & 0 \le (n \bmod M) \le N \\ h(n) * [\hat{P}_h(n) + I(n)] + w(n), & o.w. \end{cases} \tag{3}$$

Wherein $R1_{I,j}(k)$ and $R2_{Q,j}(k)$ are the matched filters real and imaginary output signals respectively. $k$ denotes $k$ delayed chips, $r_j(n)$ is the received signal at $n$ time instant in $j^{th}$ slot and consists of PSC $P(n)$ , SSC $S(n)$, $\hat{P}_h(n)$ denotes

the $h^{th}$ pilot signal, $I(n)$ denotes interference signal, and $w(n)$ denotes additive white Gauss noise. $h(n)$ is the complex channel gain. The output signals of the matched filters are then averaged by using first order IIR filter composed of the multipliers 504,505,510,511, the adders 506,507 and time delay unit, 508,509 as shown in the following equation:

$$\begin{cases} \tilde{R}1_{I,j}(k) = \alpha * \tilde{R}1_{I,j-1}(k) + (1-\alpha) * R1_{I,j}(k) \\ \tilde{R}1_{Q,j}(k) = \alpha * \tilde{R}1_{Q,j-1}(k) + (1-\alpha) * R1_{Q,j}(k) \end{cases} \tag{4}$$

Where $\tilde{R}1_{I,j}(k)$ and $\tilde{R}1_{Q,j}(k)$ are the output signals of the first order IIR filters, and $\alpha$ is a leakage factor, where $0 < \alpha < 1$, for controlling the average signal length. The first order IIR filters are used to combine the signals outputted from the matched filter so as to obtain a more reliable slot boundary. Due to the characteristic of the radio channel, the complex channel gain varies with respect to time. Therefore, $\alpha$ shall be adjusted in correspondence with the radio channel variation. Afterward, the absolute value of the real value signal and imaginary value signal outputs is calculated by ABS unit 512. Then, another first order IIR filter, which composes of the multipliers 513, 516, the adder 514, and the delay unit 515 having a leakage factor $\beta$ ($0 < \beta < 1$), is used to compensate radio channel fading. Finally, the peak value detector 517 is used to find out a delay time with the largest correlation value thereby, as shown in the following equation:

$$T_s = \arg\max_k \{\tilde{R}1_j(k)\} \tag{5}$$

Wherein $\tilde{R}1_j(k)$ is the $j^{th}$ slot output of the former first order filter, and $T_s$ is the detected slot boundary.

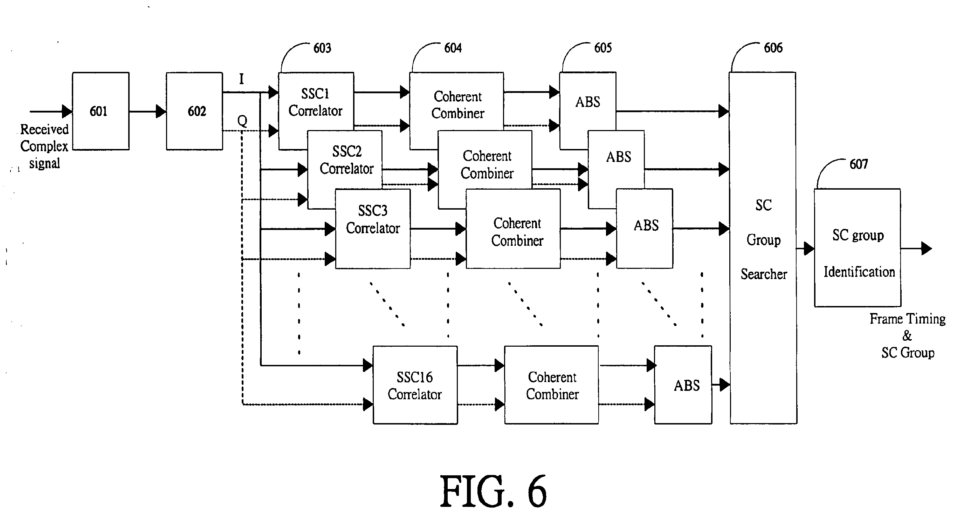

Fig.6 shows the block diagram of the second stage detector, which is used to identify the frame boundary and the scrambling code group. The second stage detector comprises a slot time adjustment unit 601, an I/Q splitter 602, a SSC correlation filter bank 603, a coherent combiner bank 604, an ABS operation unit 605, a simplified SC group searcher 606, and a SC group identification unit 607. At first, the received complex signal is delayed for a certain time by the process controller in accordance with the pipeline process. The entry time of received signal into the second stage detector is adjusted by the slot time adjustment unit 601 with respect to the slot boundary detected in the first stage. Afterward, the received complex signal is separated into a real value signal and an imaginary value signal by the I/Q splitter 602. Detection of SSC is carried out using the SSC correlation filter bank 603, as shown in the following equation:

$$R2_{I,j,i} = \text{Re}\{\sum_{n=1}^{N} r_j(n) * S_i(n)\}, \quad j \text{ is slot numbering and } N \text{ is PSC length}$$

$$\tag{6}$$

$$R2_{Q,j,i} = \text{Im}\{\sum_{n=1}^{N} r_j(n) * S_i(n)\}, \quad i \text{ is SSC numbering}$$

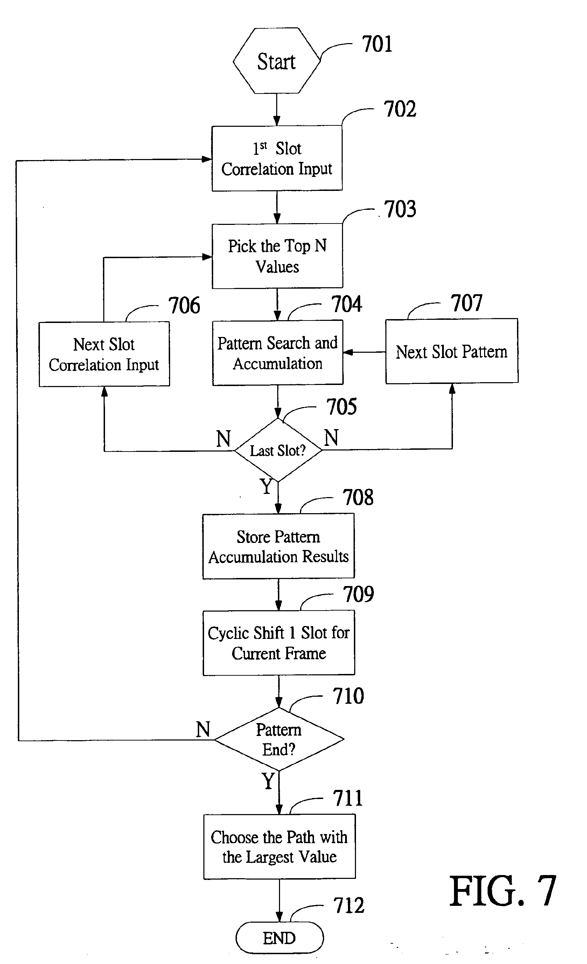

in which $R2_{I,j,i}$ and $R2_{Q,j,i}$ are respectively the real part and the imaginary part of the SSC correlation filter bank 603 output. The size of SSC correlation filter bank 603 depends on the number of SSCs, which is 16 according to 3GPP standards, SSC correlation filter bank 603 performs its work frame by frame and the results are stored for the next process. In other words, the correlation results obtained by the SSC correlation filter bank 603 are accumulated coherently, and the necessary phase information is provided by the first stage detector. Then, the absolute value of $\tilde{R}2_{j,i}$ of each SSC per slot time in one frame is calculated by the ABS bank 605. Next, the frame boundary and the scrambling code group are searched using the simplified SC group searcher 606. The flow chart of the scrambling code group searching algorithm is shown in Fig.7. Beginning from (701), the first slot correlation values $\tilde{R}2_{j,i}$ are retrieved (702), and the top $N$ values in the slot are reserved for the following process, wherein $N < 16$ (703). Thereafter, all possible combination are searched, and the value of each combination is accumulated (704). Then the process goes to judging whether the present slot time is the last one in the frame (705) If not, read in the value of the next slot and continue the process (706) by repeating the process (703) to 705. At the same time, read in the combinations for the scrambling code group according to 3G TS25.213 standards with respect to the present slot for comparison (707). The accumulated results are stored if the slot time is the last one (708) and make 1 slot cyclic shift for the current frame so as to treat the next scrambling code group combination and judge whether pattern search is ended (710). If not, repeat the process 702 to 709. If all possible combinations have been treated, select the largest value among all combinations (711) thereby ending the operation. Finally, the frame boundary is found out by the SC group identification unit 607, and the SC group is selected by the searcher 606.

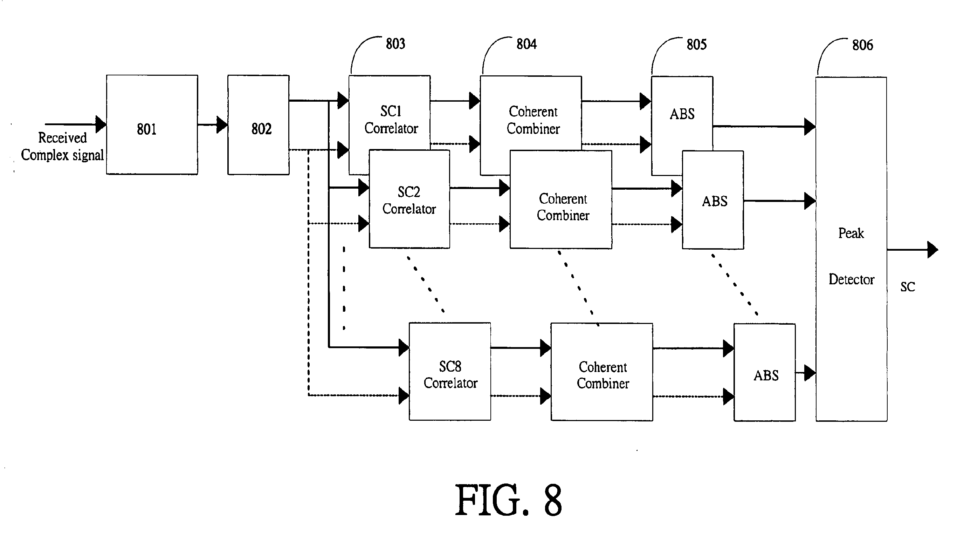

Fig.8 shows the block diagram of the third stage detector. The third stage detector comprises a frame time adjustment unit 801, an I/Q splitter 802, a SC correlation filter bank 803, a coherent combiner 804, an ABS operation unit 805, and a peak value detector 806. At first, the received complex signal is delayed for a certain time by the process controller in accordance with the pipeline process. The delayed time is longer than that in the second stage for at least one frame time. Next, the entry time to the third stage detector is adjusted by the frame time adjustment unit 801 referring to the frame boundary found out in the second stage. Afterward, the received complex signal is separated into a real value signal and an imaginary value signal by the I/Q splitter 802. The scrambling code detection is performed using the SC correlation filter bank 803 as shown below:

$$R3_{I,h} = \text{Re}\{\sum_{j=1}^{L}\sum_{n=1}^{N} r(n+(M-1)*j)*\hat{P}_h(n)\}, \quad \textit{j is slot numbering and N is slot length}$$

$$R3_{Q,h} = \text{Im}\{\sum_{j=1}^{L}\sum_{n=1}^{N} r(n+(M-1)*j)*\hat{P}_h(n)\}, \tag{7}$$

Wherein $R3_{I,h}$ and $R3_{Q,h}$ are respectively the real value and the imaginary value of the SC correlation filter bank output signal, while $L$ is the slot number in one frame. The size of SC correlation filter bank depends on the number of SC, which is 8 according to 3GPP standards. The correlation results of the SC correlation filter bank are recorded for the following process. After that, the calculated results of the SC correlation filter bank for each frame is coherently summed up using the coherent combiner 804 where the required information is provided by the first stage detector. Next, the absolute value of each correlated SC value of the scrambling code group in one frame is calculated by the ABS operation bank. Finally, the peak value detector 806 is employed to find out the maximum correlation value, and its corresponding SC is exactly the one which belongs to the cell. The equation is as follows:

$$H = \arg\max_{h}\{\tilde{R}3_h\} \tag{5}$$

Wherein R$3_h$ is the output of the $h^{th}$ ABS operation unit.

Finally, a decision unit 108 is used to verify the validity of the detected slot boundary, scrambling code group, and the scrambling code.

It is understood from the above description that the primary, advantage of this invention is that it can provide a relevant and reliable synchronization and cell search apparatus and method with low complexity. The correlated detection length in three stages is determined by measuring the received signal power. The mobile station is able to cut down its power consumption in good radio channel condition, even it can work satisfactorily in a rather degenerative radio channel by consuming regular quantity of power. For further improving detection precision and reducing average cell search time, a three-stage synchronization process with fully coherent combination is provided. Besides, a relevant pipeline procedure is employed wherein the delays for the second and the third stages are also determined according to the radio channel conditions.

Many changes and modifications in the above-described embodiment of the invention can, of course, be carried out without departing from the scope thereof. Accordingly, to promote the progress in science and the useful arts, the invention is disclosed and is intended to be limited only by the scope of the appended claims.

**Claims**

1. A synchronization and cell search apparatus for a wideband code division multiple access (WCDMA) system comprising:

    a power detector (101) coupled to receive a WCDMA signal and operable to estimate the received signal power continuously;
    a first stage detector (103) coupled to receive the WCDMA signal which includes a primary synchronization code (PSC), the first stage detector (103) operable to correlate the received WCDMA signal with the PSC to determine a slot boundary of the WCDMA signal, and to upgrade detection precision by using coherent combination;

a first time delay unit (104) coupled to receive the WCDMA signal and a control signal from a process controller (106), the first time delay unit (104) operable to output a first delayed version of the WCDMA signal;

a second stage detector (106) coupled to receive the identified slot boundary and the first delayed version of the WCDMA signal which includes a secondary synchronization code (SSC), the second state detector (106) operable to correlate per slot time the first delayed version of the WCDMA signal with each SSC based on the identified slot boundary to determine a frame boundary of the WCDMA signal and a scrambling code (SC) group associated with the WCDMA signal by means of searching the frame boundary of the WCDMA signal and top N values of computed correlation values $\dot{R}2_{j,i}$ for each slot to identify the SC group;

a second time delay unit (105) coupled to receive the WCDMA signal and a control signal from the process controller (106), the second time delay unit (105) operable to output a second delayed version of the WCDMA signal;

a third stage detector (107) coupled to receive the identified frame boundary, the identified scrambling code group, and the second delayed version of the WCDMA signal which includes a pilot signal, the third stage detector (107) operable to utilize the pilot signal, the identified scrambling code group, and the identified frame boundary to determine a scrambling code (SC) of the WCDMA signal;

a process controller (102) having an input coupled to the power detector (101) for receiving a signal representative of the WCDMA signal power measured by said power detector (101) and outputs coupled to the first, second and third stage detectors (103, 106, 107) for providing control signals thereto, wherein the process controller (102) is configured to control, as a function of the estimated WCDMA signal power, (i) the delay applied by the first and second delay units (104, 105) and (ii) the correlation length used during the determination processes in the first, second and third stage detectors (103, 106, 107); and

a decision unit (108) operable to receive and verify the validity of said slot boundary, said frame boundary, and said SC of the WCDMA signal.

2. The apparatus of claim 1, wherein said first stage detector (103) further comprises:

an I/Q splitter (501) for separating said WCDMA signal into a real value signal and an imaginary value signal;

two matched filters (502, 503) for matching said real value signal and said imaginary value signal with said PSC respectively so as to identify said slot boundary;

a first IIR first order filter (504, 506, 508, 510) coupled to receive the real value signal comprising correlation values $R1_{I,j}(k)$, the first IIR first order filter (504, 506, 508, 510) operable to compute $\dot{R}1_{I,j}(k)$ comprising an average of $R1_{I,j}(k)$ and $R1_{I,j-1}(k)$ at slot positions j and j-1, respectively, wherein $\dot{R}1_{I,j}(k)$ is computed by means of a leakage factor $\alpha$ controlling the average signal length and adjusted in correspondence with radio channel variation;

a second IIR second order filter (505, 507, 509, 511) coupled to receive the imaginary value signal correlation values $R1_{Q,j}(k)$, the second IIR first order filter (505, 507, 509, 511) operable to compute $\dot{R}1_{Q,j}(k)$ comprising an average of $R1_{Q,j}(k)$ and $\dot{R}1_{Q,j-1}(k)$ at slot positions j and j-1, respectively, wherein $\dot{R}1_{Q,j}(k)$ is computed by means of the leakage factor $\alpha$;

an ABS operation unit coupled to receive correlation values $\dot{R}1_{I,j}(k)$ and $\dot{R}1_{Q,j}(k)$, the ABS operation unit operable to compute the combined absolute value of correlation values $\dot{R}1_{I,j}(k)$ and $\dot{R}1_{Q,j}(k)$;

a third IIR first order filter (513, 514, 515, and 516) coupled to receive the combined absolute value of correlation values $\dot{R}1_{I,j}(k)$ and $\dot{R}1_{Q,j}(k)$, the third IIR first order filter (513, 514, 515, 516) operable to compute $\dot{R}1_{j}(k)$ comprising an average of the combined absolute values of correlation values $\dot{R}1_{I,j}(k)$ and $\dot{R}1_{Q,j}(k)$ over at least two slot positions j, wherein correlation values $\dot{R}1_{j}(k)$ are computed as a function of predefined radio channel fading conditions; and

a peak value detector (517) for identifying said slot boundary by searching for a maximum correlation value within correlation values $\dot{R}1_{j}(k)$ in one slot time j.

3. The apparatus of claim 1, wherein said second stage detector (106) further comprising:

a slot time adjustment unit (601) coupled to receive the first delayed version of the WCDMA signal and the maximum correlation value output from the first stage detector, the slot time adjustment unit operable to adjust said slot boundary of the first delayed version of the WCDMA signal as a function of the detected maximum correlation value output from the first stage;

an I/Q splitter (602) operable to receive and separate said WCDMA signal into a real value signal and an imaginary value signal;

a SSC correlation filter bank (603) coupled to receive said real and imaginary value signals, the SSC correlation filter band operable to compute the correlation values $R2_{I,j,l}$ representing the correlation between said SSC and said real value signal, and the correlation values $R2_{Q,j,l}$ representing the correlation between said SSC and said imaginary value signal respectively;

a coherent combiner bank (604) operable to receive and coherently combine correlation values $R2_{I,j,l}$ and $R2_{Q,j,l}$ to produce the correlation values $R2'_{j,i}$, wherein the phase information of said correlation values $R2'_{j,i}$ is provided by said first stage detector (103);

an ABS operation unit (605) operable to receive and calculate the absolute value of said correlation values $R2'_{j,i}$;

a simplified SC group searcher (606) coupled to receive the correlation values $R2'_{j,i}$, the simplified SC group searcher operable to identify, based upon the top N values of the correlation values $R2'_{j,i}$, the SC group; and

a SC group identification unit (607) coupled to receive the determined SC group and operable to determine therefrom the frame boundary.

4.  The apparatus of claim 1, wherein said third stage detector (107) further comprises:

a frame time adjustment unit (801) coupled to receive the second delayed version of the WCDMA signal, the frame time adjustment unit (801) operable to adjust the frame time according to said frame boundary detected by said second stage detector (106);

an I/Q splitter (802) for separating said second delayed version of the input signal into a real value signal and an imaginary value signal;

a SC correlation filter bank (803) for evaluating the correlation between a predetermined SC and said real value signal, and between said predetermined SC and said imaginary value signal respectively;

a coherent combiner bank (804) for coherently combining the output of said SC correlation filter bank (803), wherein the phase information being provided by said the first stage detector (103);

an ABS operating unit (805) for calculating the absolute value of said real value signal and said imaginary value signal; and

a peak value detector (806) for determining the maximum correlation value in one frame time so as to identify the desired scrambling code.

5.  The apparatus of claim 1, wherein said process controller (102) is used to compare a power P measured by said power detector (101) with a threshold value $\eta$, and based thereon, determine the correlation length obtained from said three stage detectors (103, 106, 107);

in the first stage detector (103), correlation between the WCDMA signal in one slot time and a predetermined PSC is estimated to determine said slot boundary;

in the second stage detector (106), correlation between the WCDMA signal in one frame time and a predetermined SSC is estimated to determine said frame boundary and identify said scrambling code group;

in the third stage detector (107), correlation between the WCDMA signal in one frame time and all SCs in said scrambling code group are estimated;

wherein said scrambling code group is determined by said second stage detector (106) and wherein the validity of the detected result in all three stages is verified after completion of all three stage detection process, and the result is fed bank to the check points of each said stages, the synchronization processes of the first, second and third stage detectors (103, 106, 107) are ended as soon as the valid synchronization result is obtained.

6.  The apparatus of claim 2, wherein each of said first and second IIR first order filters in said the first stage detector (103) includes:

a multiplier (504, 505) for multiplying the output of said matched filters with $1 - \alpha$, where $0 < \alpha < 1$;

an adder (506, 507) for adding together the input of said first IIR first order filter and the feed back signal;

a time delay unit (508, 509) for providing a delay time for said feed back signal; and

another multiplier (510, 511) for multiplying the leakage factor $\alpha$ to said feed back signal, where $0 < \alpha < 1$.

7.  The apparatus of claim 3, wherein said simplified SC group searcher (606) in said the second stage detector (106) is operable to (i) determine correlated values $R2'_{j,l}$ in the first slot and (ii) reserves a subset of the N largest values in the slot (iii) searching for all possible combinations is carried out and the value of each combination is accumulated according to 3G TS25.213 standards for scrambling code group combination, (iv) judging whether the present slot time is the last one in the frame, and (v) reading in the scrambling code group combinations according to 3G TS 25.213 standards with respect to the present slot for comparison to select the maximum value of all combination.

8. A synchronization and cell search method provided in a wideband code division multiple access (WCDMA) system having a power detector (101) operable to measure the signal power of a received WCDMA signal, a first stage detector (103) operable to receive a WCDMA signal including a primary synchronization code (PSC) and to determine a slot boundary of the WCDMA signal, a second stage detector (106) operable to receive the WCDMA signal including secondary a synchronization code (SSC) and to determine a frame boundary and a scramble code (SC) group, a third stage detector (107) operable to receive the WDCMA transmission including a pilot signal and to identify a scramble code corresponding to the base station from which the WCDMA signal is transmitted, and a process controller (102); the method being **characterized by**:

determining, using the first stage detector (103), a slot boundary of the WCDMA signal based upon the received WCDMA signal and the PSC;

applying a first delay (104) to the WCDMA signal prior to input to the second stage detector (106), the first delay (104) computed as a function of the measured WCDMA signal power;

determining, using the second stage detector (106) and the determined slot boundary, a frame boundary of the WCDMA signal and set of correlation values $R2_{j,i}$ from the first delayed version of the WCDMA signal and the SSC;

searching the frame boundary of the WCDMA signal and top N values of the computed correlation values $R2'_{j,i}$ in each slot to identify a SC group;

applying a second delay (105) to the WCDMA signal prior to input to the third stage detector (107), the second delay (105) computed as a function of the measured WCDMA signal power;

selecting, using the third stage detector (107), the desired scramble code as the scramble code within the identified SC group which exhibits the highest correlated value with the received WCDMA signal as the desired scramble code;

controlling the correlation length of the first, second and third stage detectors (103, 106, 107) with the process controller (102) as a function of the measured signal power; and

coherently correlating received complex signals.

## Patentansprüche

1. Synchronisations- und Zellensuch-Vorrichtung für ein Breitband-Vielfachzugriffs-Codeaufteilungs-System (WCDMA, Wideband Code Division Multiple Access), aufweisend:

einen Leistungsdetektor (101), der zum Empfangen eines WCDMA-Signals gekoppelt ist, und zum fortlaufenden Schätzen der empfangenen Signalleistung eingerichtet ist;

einen Erste-Stufe-Detektor (103), der zum Empfangen des WCDMA-Signals gekoppelt ist, das einen Primär-Synchronisierungs-Code (PSC) aufweist, wobei der Erste-Stufe-Detektor (103) zum Korrelieren des empfangenen WCDMA-Signals mit dem PSC eingerichtet ist, damit eine Schlitz-Grenze des WCDMA-Signals ermittelt wird und die Detektions-Genauigkeit durch Verwendung einer kohärenten Kombination verbessert wird;

eine erste Zeitverzögerungs-Einheit (104), die zum Empfangen des WCDMA-Signals und eines Steuersignals von einer Prozess-Steuerungseinheit (106) gekoppelt ist, wobei die erste Zeitverzögerungs-Einheit (104) zum Ausgeben einer ersten verzögerten Version des WCDMA-Signals eingerichtet ist;

einen Zweite-Stufe-Detektor (106), der zum Empfangen der identifizierten Schlitz-Grenze und der ersten verzögerten Version des WCDMA-Signals gekoppelt ist, das einen Sekundär-Synchronisierungs-Code (SSC) aufweist, wobei der Zweite-Stufe-Detektor (106) zum Korrelieren pro Schlitz-Zeit der ersten verzögerten Version des WCDMA-Signals mit jedem SSC auf der Grundlage der identifizierten Schlitz-Grenze eingerichtet ist, damit eine Rahmen-Grenze des WCDMA-Signals und eine Verwürfelungscode-Gruppe (SC, Scrambling Code), die mit dem WCDMA-Signal verknüpft ist, mittels Suchen der Rahmen-Grenze des WCDMA-Signals und oberer N Werte von berechneten Korrelationswerten $R2'_{j,i}$ für jeden Schlitz zum Identifizieren der SC-Gruppe ermittelt wird;

eine zweite Zeitverzögerungs-Einheit (105), die zum Empfangen des WCDMA-Signals und eines Steuersignals von der Prozess-Steuerungseinheit (106) gekoppelt ist, wobei die zweite Zeitverzögerungs-Einheit (105) zum Ausgeben einer zweiten verzögerten Version des WCDMA-Signals eingerichtet ist;

einen Dritte-Stufe-Detektor (107), der zum Empfangen der identifizierten Rahmen-Grenze, der identifizierten Verwürfelungscode-Gruppe und der zweiten verzögerten Version des WCDMA-Signals, das ein Pilotsignal aufweist, gekoppelt ist, wobei der Dritte-Stufe-Detektor (107) zum Verwenden des Pilotsignals, der identifizierten Verwürfelungscode-Gruppe und der identifizierten Rahmen-Grenze eingerichtet ist, so dass ein Verwürfelungscode (SC) des WCDMA-Signals ermittelt wird;

eine Prozess-Steuerungseinheit (102) die aufweist: einen Eingang, der mit dem Leistungsdetektor (101) gekoppelt ist, zum Empfangen eines Signals, das für die WCDMA-Signalleistung, die von dem Leistungsdetektor (101) gemessen wird, repräsentativ ist, und Ausgänge, die mit dem Erste-, Zweite- und Dritte-Stufe-Detektor (103, 106, 107) gekoppelt sind, zum Bereitstellen von Steuersignalen an diese, wobei die Prozess-Steuerungseinheit (102) eingerichtet ist zum Steuern in Abhängigkeit von der geschätzten WCDMA-Signalleistung (i) der Verzögerung, die durch die erste und zweite Verzögerungseinheit (104, 105) angewendet wird, und (ii) der Korrelationslänge, die während der Ermittlungsprozesse in dem Erste-, Zweite- und Dritte-Stufe-Detektor (103, 106, 107) verwendet wird; und

eine Entscheidungseinheit (108), die zum Empfangen und Verifizieren der Gültigkeit der Schlitz-Grenze, der Rahmen-Grenze und des SC des WCDMA-Signals eingerichtet ist.

2. Vorrichtung gemäß Anspruch 1, wobei der Erste-Stufe-Detektor (103) ferner aufweist:

einen I/Q-Aufteiler (501) zum Trennen des WCDMA-Signals in ein reellwertiges Signal und ein imaginärwertiges Signal;

zwei angepasste Filter (502, 503) zum jeweiligen Abgleichen des reellwertigen Signals und des imaginärwertigen Signals mit dem PSC, so dass die Schlitz-Grenze identifiziert wird;

ein erstes IIR-Filter erster Ordnung (504, 506, 508, 510), das zum Empfangen des reellwertigen Signals gekoppelt ist, das Korrelationswerte $R1_{I,j}(k)$ aufweist, wobei das erste IIR-Filter erster Ordnung (504, 506, 508, 510), das zum Berechnen von $\dot{R}1_{I,j}(k)$ eingerichtet ist, einen Durchschnitt von $R1_{I,j}(k)$ und $\dot{R}1_{I,j}(k)$ an Schlitzpositionen j beziehungsweise j-1 aufweist, wobei $\dot{R}1_{I,j}(k)$ mittels eines Streufaktors $\alpha$ berechnet wird, der die durchschnittliche Signallänge steuert, und entsprechend der Funkkanalvariation angepasst wird;

ein zweites IIR-Filter zweiter Ordnung (505, 507, 509, 511), das gekoppelt ist zum Empfangen der Imaginärwertiges-Signal-Korrelationswerte $R1_{Q,j}(k)$, wobei das zweite IIR-Filter erster Ordnung (505, 507, 509, 511), das zum Berechnen von $\dot{R}1_{Q,j}(k)$ eingerichtet ist, einen Durchschnitt von $R1_{Q,j}(k)$ und $\dot{R}1_{I,j-1}(k)$ an Schlitzpositionen j beziehungsweise j-1 aufweist, wobei $\dot{R}1_{Q,j}(k)$ mittels des Streufaktors $\alpha$ berechnet wird;

eine ABS-Operationseinheit, die zum Empfangen von Korrelationswerten $\dot{R}1_{I,j}(k)$ und $\dot{R}1_{Q,j}(k)$ gekoppelt ist, wobei die ABS-Operationseinheit zum Berechnen des kombinierten Betrags der Korrelationswerte $\dot{R}1_{I,j}(k)$ und $\dot{R}1_{Q,j}(k)$ eingerichtet ist;

ein drittes IIR-Filter erster Ordnung (513, 514, 515 und 516), das zum Empfangen des kombinierten Betrags der Korrelationswerte $\dot{R}1_{I,j}(k)$ und $\dot{R}1_{Q,j}(k)$ gekoppelt ist, wobei das dritte IIR-Filter erster Ordnung (513, 514, 515, 516), das zum Berechnen von $\dot{R}1_j(k)$ eingerichtet ist, einen Durchschnitt der kombinierten Beträge der Korrelationswerte $\dot{R}1_{I,j}(k)$ und $\dot{R}1_{Q,j}(k)$ über mindestens zwei Schlitzpositionen j aufweist, wobei die Korrelationswerte $\dot{R}1_j(k)$ in Abhängigkeit von vordefinierten Funkkanal-Fading-Bedingungen berechnet werden; und

einen Spitzenwertdetektor (517) zum Identifizieren der Schlitz-Grenze durch Suchen nach einem maximalen Korrelationswert innerhalb der Korrelationswerte $\dot{R}1_j(k)$ in einer Schlitz-Zeit j.

3. Vorrichtung gemäß Anspruch 1, wobei der Zweite-Stufe-Detektor (106) ferner aufweist:

eine Schlitz-Zeit-Anpassungs-Einheit (601), die zum Empfangen der ersten verzögerten Version des WCDMA-Signals und der maximalen Korrelationswert-Ausgabe von dem Erste-Stufe-Detektor gekoppelt ist, wobei die Schlitz-Zeit-Anpassungs-Einheit zum Anpassen der Schlitz-Grenze der ersten verzögerten Version des WCDMA-Signals in Abhängigkeit von der detektierten maximalen Korrelationswert-Ausgabe von der ersten Stufe eingerichtet ist;

einen I/Q-Aufteiler (602), der zum Empfangen und Trennen des WCDMA-Signals in ein reellwertiges Signal und ein imaginärwertiges Signal eingerichtet ist;

eine SSC-Korrelations-Filterbank (603), die zum Empfangen der reellwertigen und imaginärwertigen Signale gekoppelt ist, wobei die SSC-Korrelationsfilterbank, die zum Berechnen der Korrelationswerte $R2_{I,j,l}$ eingerichtet ist, die die Korrelation zwischen dem SSC und dem reellwertigen Signal repräsentieren, beziehungsweise die Korrelationswerte $R2_{Q,j,l}$, die die Korrelation zwischen dem SSC und dem imaginärwertigen Signal repräsentieren;

eine kohärente Kombinierbank (604), die zum Empfangen und kohärenten Kombinieren von Korrelationswerten $R2_{I,j,l}$ und $R2_{Q,j,l}$ zum Erzeugen der Korrelationswerte $\dot{R}2_{j,i}$ eingerichtet ist, wobei die Phaseninformation der Korrelationswerte $\dot{R}2_{j,i}$ durch den Erste-Stufe-Detektor (103) bereitgestellt wird;

eine ABS-Operationseinheit (605), die zum Empfangen und Berechnen des Betrags der Korrelationswerte $\dot{R}2_{j,i}$ eingerichtet ist;

einen vereinfachten SC-Gruppensucher (606), der zum Empfangen der Korrelationswerte $\dot{R}2_{j,i}$ gekoppelt ist, wobei der vereinfachte SC-Gruppensucher zum Identifizieren der SC-Gruppe auf der Grundlage der oberen N

Werte der Korrelationswerte $\acute{R}2_{j,i}$ eingerichtet ist; und
eine SC-Gruppen-Identifizierungs-Einheit (607), die zum Empfangen der ermittelten SC-Gruppe gekoppelt, und zum daraus Ermitteln der Rahmen-Grenze eingerichtet ist.

4. Vorrichtung gemäß Anspruch 1, wobei der Dritte-Stufe-Detektor (107) ferner aufweist:

eine Rahmenzeit-Anpassungseinheit (801), die zum Empfangen der zweiten verzögerten Version des WCDMA-Signals gekoppelt ist, wobei die Rahmenzeit-Anpassungseinheit (801) zum Anpassen der Rahmenzeit gemäß der von dem Zweite-Stufe-Detektor (106) detektierten Rahmen-Grenze eingerichtet ist;
einen I/Q-Aufteiler (802) zum Trennen der zweiten verzögerten Version des Eingangssignals in ein reellwertiges Signal und ein imaginärwertiges Signal;
eine SC-Korrelations-Filterbank (803) zum Bewerten der Korrelation zwischen einem vorbestimmten SC und dem reellwertigen Signal, beziehungsweise zwischen dem vorbestimmten SC und dem imaginärwertigen Signal;
eine kohärente Kombinierbank (804) zum kohärenten Kombinieren der Ausgabe der SC-Korrelations-Filterbank (803), wobei die Phaseninformation durch den Erste-Stufe-Detektor (103) bereitgestellt wird;
eine ABS-Operations-Einheit (805) zum Berechnen des Betrags des reellwertigen Signals und des imaginärwertigen Signals; und
einen Spitzenwertdetektor (806) zum Ermitteln des maximalen Korrelationswertes in einer Rahmenzeit, damit der gewünschte Verwürfelungscode identifiziert wird.

5. Vorrichtung gemäß Anspruch 1, wobei die Prozess-Steuerungseinheit (102) zum Vergleichen einer von dem Leistungsdetektor (101) gemessenen Leistung P mit einem Schwellwert $\eta$, und auf Grundlage davon zum Ermitteln der von den drei Stufe-Detektoren (103, 106, 107) erhaltenen Korrelationslänge verwendet wird;

zum Ermitteln der Schlitz-Grenze in dem Erste-Stufe-Detektor (103) die Korrelation zwischen dem WCDMA-Signal in einer Schlitz-Zeit und einem vorbestimmten PSC geschätzt wird; wobei
zum Bestimmen der Rahmen-Grenze und zum Identifizieren der Verwürfelungscode-Gruppe in dem Zweite-Stufe-Detektor (106) die Korrelation zwischen dem WCDMA-Signal in einer Rahmenzeit und einem vorbestimmten SSC geschätzt wird;
in dem Dritte-Stufe-Detektor (107) die Korrelation zwischen dem WCDMA-Signal in einer Rahmenzeit und allen SCs in der Verwürfelungscode-Gruppe geschätzt werden,

wobei die Verwürfelungscode-Gruppe durch den Zweite-Stufe-Detektor (106) ermittelt wird, und wobei die Gültigkeit des erfassten Ergebnisses in allen drei Stufen nach dem Beenden aller drei Stufendetektions-Prozesse verifiziert wird, und das Ergebnis zu den Überprüfungspunkten von jeder der Stufen rückgeführt wird, und die Synchronisierungsprozesse des Erste-, Zweite- und Dritte-Stufe-Detektors (103, 106, 107) bei Erhalten des gültigen Synchronisierungs-Ergebnisses beendet werden.

6. Vorrichtung gemäß Anspruch 2, wobei jedes von dem ersten und zweiten IIR-Filter erster Ordnung in dem Erste-Stufe-Detektor (103) aufweist:

einen Multiplizierer (504, 505) zum Multiplizieren der Ausgabe der angepassten Filter mit 1 - $\alpha$, wobei 0 < $\alpha$ < 1;
einen Addierer (506, 507) zum Zusammenaddieren der Eingabe des ersten IIR-Filters erster Ordnung und des Rückführungs-Signals;
eine Zeitverzögerungs-Einheit (508, 509) zum Bereitstellen einer Verzögerungszeit für das Rückführungs-Signal; und
einen anderen Multiplizierer (510, 511) zum Multiplizieren des Streufaktors $\alpha$ mit dem Rückführungs-Signal, wobei 0 < $\alpha$ < 1.

7. Vorrichtung gemäß Anspruch 3, wobei der vereinfachte SC-Gruppensucher (606) in dem Zweite-Stufe-Detektor (106) (i) zum Ermitteln von korrelierten Werten $\acute{R}2_{j,l}$ in dem ersten Schlitz eingerichtet ist und (ii) eine Teilmenge der N größten Werte in dem Schlitz reserviert, wobei (iii) eine Suche nach allen möglichen Kombinationen durchgeführt wird, und der Wert von jeder Kombination gemäß 3G-TS25.213-Standards für Verwürfelungscode-Gruppenkombinationen akkumuliert wird, (iv) bewertet wird, ob die aktuelle Schlitz-Zeit die letzte in dem Rahmen ist, und (v) in den Verwürfelungscode-GruppenKombinationen gemäß den 3G-TS-25.213-Standards in Bezug auf den aktuellen Schlitz für einen Vergleich zum Auswählen des maximalen Wertes aller Kombinationen gelesen wird.

8. Synchronisierungs- und Zellensuch-Verfahren, das in einem Breitband-Vielfachzugriffs-Codeaufteilungs-System (WCDMA) bereitgestellt wird, aufweisend: einen Leistungsdetektor (101), der zum Messen der Signalleistung eines empfangenen WCDMA-Signals eingerichtet ist, einen Erste-Stufe-Detektor (103), der zum Empfangen eines WCDMA-Signals, das einen Primär-Synchronisierungs-Code (PSC) aufweist, und zum Ermitteln einer Schlitz-Grenze des WCDMA-Signals eingerichtet ist, einen Zweite-Stufe-Detektor (106), der zum Empfangen des WCDMA-Signals, das einen Sekundär-Synchronisierungs-Code (SSC) aufweist, und zum Bestimmen einer Rahmen-Grenze und einer Verwürfelungscode-Gruppe eingerichtet ist, einen Dritte-Stufe-Detektor (107), der zum Empfangen der WCDMA-Übertragung einschließlich eines Pilotsignals und zum Identifizieren eines Verwürfelungscodes eingerichtet ist, der der Basisstation entspricht, von welcher das WCDMA-Signal übertragen wird, und eine Prozess-Steuerungseinheit (102); wobei das Verfahren **gekennzeichnet ist durch**:

Ermitteln einer Schlitz-Grenze des WCDMA-Signals mittels des Erste-Stufe-Detektors (103) auf der Grundlage des empfangenen WCDMA-Signals und des PSC,

Anwenden einer ersten Verzögerung (104) auf das WCDMA-Signal vor der Eingabe in den Zweite-Stufe-Detektor (106), wobei die erste Verzögerung (104) in Abhängigkeit von der gemessenen WCDMA-Signalleistung berechnet wird,

Ermitteln einer Rahmen-Grenze des WCDMA-Signals und einer Menge von Korrelationswerten $\dot{R}2_{j,i}$ von der ersten verzögerten Version des WCDMA-Signals und des SSC mittels des Zweite-Stufe-Detektors (106) und der bestimmten Schlitz-Grenze,

Suchen der Rahmen-Grenze des WCDMA-Signals und von oberen N Werten der berechneten Korrelationswerte $\dot{R}2_{j,i}$ in jedem Schlitz zum Identifizieren einer SC-Gruppe,

Anwenden einer zweiten Verzögerung (105) auf das WCDMA-Signal vor der Eingabe in den Dritte-Stufe-Detektor (107), wobei die zweite Verzögerung (105) in Abhängigkeit von der gemessenen WCDMA-Signalleistung berechnet wird,

Auswählen mittels des Dritte-Stufe-Detektor (107) des gewünschten Verwürfelungscodes als den Verwürfelungscode innerhalb der identifizierten SC-Gruppe, der den höchsten mit dem empfangenen WCDMA-Signal korrelierten Wert aufweist, als den gewünschten Verwürfelungscode,

Steuern der Korrelationslänge des Erste-, Zweite- und Dritte-Stufe-Detektors (103, 106, 107) mit der Prozess-Steuerungseinheit (102) in Abhängigkeit von der gemessenen Signalleistung, und

kohärentes Korrelieren von empfangenen komplexen Signalen.

## Revendications

**1.** Dispositif de recherche de cellules et de synchronisation pour un système d'accès multiple par répartition en code à bande large (WCDMA) comportant :

un détecteur de puissance (101) couplé pour recevoir un signal d'accès WCDMA et apte à estimer la puissance du signal reçu de manière continue ;

un détecteur de premier étage (103) couplé pour recevoir le signal d'accès WCDMA lequel comporte un code de synchronisation primaire (PSC), le détecteur de premier étage (103) étant apte à corréler le signal WCDMA reçu avec le code PSC pour déterminer une frontière d'intervalle de temps du signal d'accès WCDMA, et pour mettre à niveau une précision de détection en utilisant une combinaison cohérente ;

une première unité de temporisation (104) couplée pour recevoir le signal d'accès WCDMA et un signal de commande d'un contrôleur de processus (106), la première unité de temporisation (104) étant apte à générer en sortie une première version retardée du signal d'accès WCDMA ;

un détecteur de deuxième étage (106) couplé pour recevoir la frontière d'intervalle de temps identifiée et la première version retardée du signal d'accès WCDMA qui comporte un code de synchronisation secondaire (SSC), le détecteur de deuxième étage (106) étant apte à corréler par durée d'intervalle de temps la première version retardée du signal d'accès WCDMA avec chaque code SSC sur la base de la frontière d'intervalle de temps identifiée pour déterminer une frontière de trame du signal d'accès WCDMA et un groupe de codes d'embrouillage (SC) associé au signal d'accès WCDMA par le biais d'une recherche de la frontière de trame du signal d'accès WCDMA et des N valeurs supérieures des valeurs de corrélation calculées $\dot{R}2_{j,i}$, pour chaque intervalle de temps pour identifier le groupe SC ;

une seconde unité de temporisation (105) couplée pour recevoir le signal d'accès WCDMA et un signal de commande du contrôleur de processus (106), la seconde unité de temporisation (105) étant apte à générer en sortie une seconde version retardée du signal d'accès WCDMA ;

un détecteur de troisième étage (107) couplé pour recevoir la frontière de trame identifiée, le groupe de codes d'embrouillage identifié, et la seconde version retardée du signal d'accès WCDMA qui comporte un signal pilote, le détecteur de troisième étage (107) étant apte à utiliser le signal pilote, le groupe de codes d'embrouillage identifié, et la frontière de trame identifiée pour déterminer un code d'embrouillage (SC) du signal d'accès WCDMA;

un contrôleur de processus (102) ayant une entrée couplée au détecteur de puissance (101) pour recevoir un signal représentatif de la puissance de signal d'accès WCDMA mesurée par ledit détecteur de puissance (101) et des sorties couplées aux détecteurs de premier, deuxième et troisième étages (103, 106, 107) pour y délivrer des signaux de commande, dans lequel le contrôleur de processus (102) est configuré pour commander, en fonction de la puissance de signal d'accès WCDMA estimée, (i) le retard appliqué par les première et seconde unités de retard (104, 105) et (ii) la longueur de corrélation utilisée au cours des processus de détermination dans les premier, deuxième et troisième détecteurs à étages (103, 106, 107) ; et

une unité de décision (108) apte à recevoir et à vérifier la validité de ladite frontière d'intervalle de temps, de ladite frontière de trame, et dudit code SC du signal d'accès WCDMA.

2. Dispositif selon la revendication 1, dans lequel ledit détecteur de premier étage (103) comporte en outre :

un séparateur I/Q (501) pour séparer ledit signal d'accès WCDMA en un signal de valeur réelle et un signal de valeur imaginaire ;

deux filtres adaptés (502, 503) pour faire correspondre ledit signal de valeur réelle et ledit signal de valeur imaginaire avec ledit code PSC respectivement, afin d'identifier ladite frontière d'intervalle de temps ;

un premier filtre récursif du premier ordre (504, 506, 508, 510) couplé pour recevoir le signal de valeur réelle comportant des valeurs de corrélation $R1_{I,j}(k)$, le premier filtre récursif du premier ordre (504, 506, 508, 510) étant apte à calculer $\dot{R}1_{I,j}(k)$ comportant une moyenne de $R1_{I,j}(k)$ et $\dot{R}1_{I,j-1}(k)$ à des positions d'intervalle de temps j et j-1, respectivement, où $\dot{R}1_{I,j}(k)$ est calculée au moyen d'un facteur de fuite $\alpha$ commandant la longueur de signal moyenne et ajusté en correspondance d'une variation de canal radio ;

un second filtre récursif du deuxième ordre (505, 507, 509, 511) couplé pour recevoir les valeurs de corrélation $R1_{Q,j}(k)$ de signal de valeur imaginaire, le second filtre récursif du deuxième ordre (505, 507, 509, 511) étant apte à calculer $\dot{R}1_{Q,j}(k)$ comportant une moyenne de $R1_{Q,j}(k)$ et $\dot{R}1_{Q,j-1}(k)$ à des positions d'intervalle de temps j et j-1, respectivement, où $R1_{Q,j}(k)$ est calculée au moyen du facteur de fuite $\alpha$ ;

une unité d'opération ABS couplée pour recevoir des valeurs de corrélation $\dot{R}1_{I,j}(k)$ et $\dot{R}1_{Q,j}(k)$, l'unité d'opération ABS étant apte à calculer la valeur absolue combinée de valeurs de corrélation $\dot{R}1_{I,j}(k)$ et $\dot{R}1_{Q,j}(k)$,

un troisième filtre récursif du premier ordre (513, 514, 515 et 516) couplé pour recevoir la valeur absolue combinée des valeurs de corrélation $\dot{R}1_{I,j}(k)$ et $\dot{R}1_{Q,j}(k)$, le troisième filtre récursif du premier ordre (513, 514, 515, 516) étant apte à calculer $\dot{R}1_j(k)$ comportant une moyenne des valeurs absolues combinées des valeurs de corrélation $\dot{R}1_{I,j}(k)$ et $\dot{R}1_{Q,j}(k)$ sur au moins deux positions d'intervalle de temps j, où les valeurs de corrélation $\dot{R}1_j(k)$ sont calculées en fonction d'états prédéfinis d'évanouissement de canal radio ; et

un détecteur de valeur de crête (517) pour identifier ladite frontière d'intervalle de temps par la recherche d'une valeur de corrélation maximale dans les valeurs de corrélation $\dot{R}1_j(k)$ dans une durée d'intervalle de temps j.

3. Dispositif selon la revendication 1, dans lequel ledit détecteur de deuxième étage (106) comporte en outre :

une unité d'ajustement de durée d'intervalle de temps (601) couplée pour recevoir la première version retardée du signal d'accès WCDMA et la valeur de corrélation maximale générée en sortie à partir du détecteur de premier étage, l'unité d'ajustement de durée d'intervalle de temps étant apte à ajuster ladite frontière d'intervalle de temps de la première version retardée du signal d'accès WCDMA en fonction de la valeur de corrélation maximale détectée générée en sortie à partir du premier étage ;

un séparateur I/Q (602) apte à recevoir et à séparer ledit signal d'accès WCDMA en un signal de valeur réelle et un signal de valeur imaginaire ;

une batterie de filtres de corrélation SSC (603) couplée pour recevoir lesdits signaux de valeurs réelles et imaginaires, la batterie de filtres de corrélation SSC étant apte à calculer les valeurs de corrélation $R2_{I,j,l}$ représentant la corrélation entre ledit code SSC et ledit signal de valeur réelle, et les valeurs de corrélation $R2_{Q,j,l}$ représentant la corrélation entre ledit code SSC et ledit signal de valeur imaginaire, respectivement ;

une batterie de combineurs cohérents (604) apte à recevoir et à combiner de manière cohérente des valeurs de corrélation $R2_{I,j,l}$ et $R2_{Q,j,l}$ pour produire les valeurs de corrélation $\dot{R}2_{j,i}$, où les informations de phase desdites valeurs de corrélation $\dot{R}2_{j,i}$ sont délivrées par ledit détecteur de premier étage (103) ;

une unité d'opération ABS (605) apte à recevoir et à calculer la valeur absolue desdites valeurs de corrélation $\dot{R}2_{j,i}$ ;

un élément de recherche de groupe de codes SC simplifié (606) couplé pour recevoir les valeurs de corrélation $\dot{R}2_{j,i}$, l'élément de recherche de groupe de codes SC simplifié étant apte à identifier, sur la base des N valeurs supérieures des valeurs de corrélation $\dot{R}2_{j,i}$, le groupe de codes SC ; et

une unité d'identification de groupe de codes SC (607) couplée pour recevoir le groupe de codes SC déterminé et apte à déterminer, dans celui-ci, la frontière de trame.

**4.** Dispositif selon la revendication 1, dans lequel ledit détecteur de troisième étage (107) comporte en outre :

une unité d'ajustement de temps de trame (801) couplée pour recevoir la seconde version retardée du signal d'accès WCDMA, l'unité d'ajustement de temps de trame (801) étant apte à ajuster le temps de trame selon ladite frontière de trame détectée par ledit détecteur de deuxième étage (106) ;

un séparateur I/Q (802) pour séparer ladite seconde version retardée du signal d'entrée en un signal de valeur réelle et un signal de valeur imaginaire ;

une batterie de filtres de corrélation de codes SC (803) pour évaluer la corrélation entre un code SC prédéterminé et ledit signal de valeur réelle, et entre ledit code SC prédéterminé et ledit signal de valeur imaginaire respectivement ;

une batterie de combineurs cohérents (804) pour combiner de façon cohérente la sortie de ladite batterie de filtres de corrélation de codes SC (803), où les informations de phase sont délivrées par ledit détecteur de première étage (103) ;

une unité d'exploitation ABS (805) pour calculer la valeur absolue dudit signal de valeur réelle et dudit signal de valeur imaginaire ; et

un détecteur de valeur de crête (806) pour déterminer la valeur de corrélation maximale dans un temps de trame afin d'identifier le code d'embrouillage désiré.

**5.** Dispositif selon la revendication 1, dans lequel ledit contrôleur de processus (102) est utilisé pour comparer une puissance P mesurée par ledit détecteur de puissance (101) à une valeur seuil $\eta$, et sur la base de celle-ci, pour déterminer la longueur de corrélation obtenue à partir desdits trois détecteurs à étages (103, 106, 107) ;

dans le détecteur de première étage (103), une corrélation entre le signal d'accès WCDMA dans une durée d'intervalle de temps et un code PSC prédéterminé est estimée pour déterminer ladite frontière d'intervalle de temps ;

dans le détecteur de deuxième étage (106), une corrélation entre le signal d'accès WCDMA dans un temps de trame et un code SSC prédéterminé est estimée pour déterminer ladite frontière de trame et pour identifier ledit groupe de codes d'embrouillage ;

dans le détecteur de troisième étage (107), une corrélation entre le signal d'accès WCDMA dans un temps de trame et tous les codes CS dans ledit groupe de codes d'embrouillage est estimée ;

dans lequel ledit groupe de codes d'embrouillage est déterminé par ledit détecteur de deuxième étage (106) et dans lequel la validité du résultat détecté dans les trois étages est vérifiée après l'achèvement des trois processus de détection à étages, et le résultat est introduit par rétroaction dans les points de vérification de chacun desdits étages, les processus de synchronisation des premier, deuxième et troisième détecteurs à étages (103, 106, 107) sont terminés dès que le résultat valide de synchronisation est obtenu.

**6.** Dispositif selon la revendication 2, dans lequel chacun desdits premier et second filtres récursifs du premier ordre dans ledit détecteur de première étage (103) comporte :

un multiplicateur (504, 505) pour multiplier la sortie desdits filtres adaptés par $1 - \alpha$, où $0 < \alpha < 1$ ;

un additionneur (506, 507) pour additionner ensemble l'entrée dudit premier filtre récursif du premier ordre et le signal de rétroaction ;

une unité de temporisation (508, 509) pour délivrer un temps de retard pour ledit signal de rétroaction ; et

un autre multiplicateur (510, 511) pour multiplier le facteur de fuite $\alpha$ avec ledit signal de rétroaction, où $0 < \alpha < 1$.

**7.** Dispositif selon la revendication 3, dans lequel ledit élément de recherche de groupe de codes SC simplifié (606) dans ledit détecteur de deuxième étage (106) est apte à (i) déterminer des valeurs corrélées $\dot{R}2_{j,l}$ dans la première intervalle de temps et (ii) réserve un sous-ensemble des N valeurs les plus élevées dans l'intervalle de temps, (iii) une recherche de toutes les combinaisons possibles est mise en oeuvre et la valeur de chaque combinaison est accumulée selon les normes 3G TS25.213 pour une combinaison de groupes de codes d'embrouillage, (iv) à décider si la durée d'intervalle de temps en cours est le dernier dans la trame et (v) à lire les combinaisons de groupes de codes d'embrouillage selon les normes 3G TS 25.213 relativement à la l'intervalle de temps en cours pour une comparaison afin de sélectionner la valeur maximale de toutes les combinaisons.

**EP 1 391 999 B1**

8. Procédé de recherche de cellules et de synchronisation délivré dans un système d'accès multiple par répartition en code à bande large (WCDMA) ayant un détecteur de puissance (101) apte à mesurer la puissance de signal d'un signal d'accès WCDMA reçu, un détecteur de première étage (103) apte à recevoir un signal d'accès WCDMA comportant un code de synchronisation primaire (PSC) et à déterminer une frontière d'intervalle de temps du signal d'accès WCDMA, un détecteur de étage (106) apte à recevoir le signal d'accès WCDMA comportant un code de synchronisation secondaire (SSC) et à déterminer une frontière de trame et un groupe de codes d'embrouillage (SC), un détecteur de troisième étage (107) apte à recevoir la transmission WCDMA comportant un signal pilote et à identifier un code d'embrouillage correspondant à la station de base à partir laquelle le signal d'accès WCDMA est transmis, et un contrôleur de processus (102), le procédé étant **caractérisé par** les étapes consistant à :

déterminer, en utilisant le détecteur de premier étage (103), une frontière d'intervalle de temps du signal d'accès WCDMA sur la base du signal d'accès WCDMA reçu et du code PSC;

appliquer un premier retard (104) au signal d'accès WCDMA avant son entrée dans le détecteur de deuxième étage (106), le premier retard (104) étant calculé en fonction de la puissance de signal d'accès WCDMA mesurée ;

déterminer, en utilisant le détecteur de deuxième étage (106), et la frontière d'intervalle de temps déterminée, une frontière de trame du signal d'accès WCDMA et un ensemble de valeurs de corrélation $\hat{R}2_{j,i}$ à partir de la première version retardée du signal d'accès WCDMA et du code SSC ;

rechercher la frontière de trame du signal d'accès WCDMA et les N valeurs supérieures des valeurs de corrélation calculées $\hat{R}2_{j,i}$ dans chaque intervalle de temps pour identifier un groupe de codes SC;

appliquer un second retard (105) au signal d'accès WCDMA avant sont entrée dans le détecteur de troisième étage (107), le second retard (105) étant calculé en fonction de la puissance de signal d'accès WCDMA mesurée ;

sélectionner, en utilisant le détecteur de troisième étage (107), le code d'embrouillage désiré en tant que le code d'embrouillage dans le groupe de codes SC identifié qui présente la valeur corrélée la plus élevée avec le signal d'accès WCDMA reçu en tant que le code d'embrouillage désiré ;

contrôler la longueur de corrélation des premier, deuxième et troisième détecteurs à étages (103, 106, 107) avec le contrôleur de processus (102) en fonction de la puissance de signal mesurée ; et

corréler de manière cohérente les signaux complexes reçus.

**16**

FIG. 1

# FIG. 2

# FIG. 3

FIG. 4

FIG. 5

EP 1 391 999 B1

FIG. 6

EP 1 391 999 B1

Start — 701

1st Slot Correlation Input — 702

Pick the Top N Values — 703

706 — Next Slot Correlation Input

Pattern Search and Accumulation — 704

707 — Next Slot Pattern

Last Slot? — 705
N          N
Y

Store Pattern Accumulation Results — 708

Cyclic Shift 1 Slot for Current Frame — 709

Pattern End? — 710
N
Y

Choose the Path with the Largest Value — 711

END — 712

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0101596 A
- WO 0055992 A
- US 6289007 B
- US 6226315 B
- AU 6058100
- WO 017092 A
- WO 0176087 A